# EUROPEAN PATENT SPECIFICATION

(11) **EP 0 876 785 B1**
(45) Date of publication and mention of the grant of the patent: **10.07.2002**
(21) Application number: 98201289.0
(22) Date of filing: 21.04.1998
(51) Int. Cl.: A47F 5/00, A47F 5/10, B62B 3/00

(54) **Article transporter, especially for flower crates**
Handwagen, insbesondere für Blumenkästchen
Chariot, en particulier pour caisses de plante à fleurs

(30) Priority: 21.04.1997 NL 1005861
(43) Date of publication of application: 11.11.1998
(73) Proprietor: Pagter & Partners International B.V., 4670 AA Dinteloord (NL)
(72) Inventor: Kaak, Willem-Jan, 2162 CM Lisse (NL); De Pagter, Janus Adriaan Willem, 4671 AB Dinteloord (NL)
(74) Representative: de Bruijn, Leendert C.

(56) References cited:
- CH-A- 676 450
- FR-A- 2 405 385
- FR-A- 2 537 949
- FR-A- 2 589 830
- FR-A- 2 612 863

## Description

The invention relates to an article transporter in which crates intended to hold flowers or plants can be placed, comprising a base section or base frame, provided with wheels on the underside, and vertically positioned uprights, fitted at the comers of the base section or base frame, which uprights are provided with openings, and guard means which extend essentially horizontally between the uprights, the guard means being provided at least at a first end with fixing means which can be detachably fixed in the openings.

Guard means with the aid of which flowers or plants placed in an article transporter or truck can be protected have been disclosed in the prior art. Flowers are frequently transported, for example at auctions, in plastic crates which are placed on open flower trucks of the type mentioned in the preamble. When growers or dealers wheel the essentially open flower trucks at the auction there is a substantial risk that the flowers placed in the truck will become damaged during transport. Especially flowers with relatively long stems become damaged easily because they bend over the edge of the truck and protrude beyond the periphery of the flower truck itself. In order to limit the risk of damage to flowers during transport it is sensible to provide the uprights of the flower trucks with guard means which prevent the flowers protruding out of the crates beyond the periphery of the flower truck.

The aim of the present invention is to provide relatively inexpensive guard means for a flower and/or plant truck, which means can be detachably fixed, simply and rapidly.

Said aim is achieved in the present invention in that the fixing means consist of two essentially parallel strips positioned some distance apart, at least one of which strips is elastically bendable, whilst a notch or hook has been made in at least one strip. The advantage of this is that the strips can be moved towards one another, for example by hand, and then placed in one or more openings. When the strips are then released, they spring back into their original shape and wedge tightly in the openings. In this way a robust, but also simple and relatively inexpensive, solution is available for fixing the guard means to the uprights of the truck.

Since the fixing means according to the present invention are fitted by hand, it is advantageous that a depression in which a thumb or finger can be placed is made in those edges of the two strips which face away from one another. The depressions in two opposing strips provide a finger and thumb hold when the strips are pushed towards one another. Moreover, because of their shape, the depressions make it clear how the fixing means work.

The aim is to match the dimensions of the fixing means to the size and mutual spacing of the openings in the uprights of a truck of standard dimensions, such as a 'Danish truck'.

According to the invention it is possible for the guard means to be provided with a band or a sheet of such a length that the band or the sheet can be wrapped around the uprights and with securing means for detachably securing the other end of the part wrapped around the uprights to the uprights or to the guard means. The advantage of this is, firstly, that the guard means can be fitted around all sides of the truck. Furthermore, the length of the band or the sheet is adjustable. If the truck is completely filled and the flowers protrude a long way outside the truck, it is advantageous for the band or the sheet to be kept relatively long. When band or the sheet is pulled tight, the flowers will be pulled inside the truck. If the truck is filled to a lesser extent, it will be possible for the band or the sheet to be less long.

In this context it is advantageous for the securing means to be formed by adhesive means or touch-and-close strip. This enables the guard means to be secured and detached again very quickly and in a simple manner.

According to an advantageous embodiment it is possible for the securing means to be formed by a hinged strip with lock points therein, it being possible for the hinged strip to be folded around the band or the sheet, as a result of which the lock points grip forcefully in the band or the sheet. A reliable fixing, which, moreover, can be repeated several times in succession, is achieved in this way.

According to the invention it is also possible for the band or the sheet to be at least partially rolled up, a hook element being fixed to the roll for fixing the part wound around the uprights to the truck or to the guard means.

Rolling up the band or the sheet is advantageous both when the band or the sheet is in use and when it is stored. In use, the first end can be secured in one of the uprights, after which a user can walk around the truck, unrolling the band or the sheet. Rolling up also allows compact storage of the guard means.

According to another advantageous embodiment, it is possible for the guard means to be formed by a shield, which is provided with fixing means at the second end. The shield can be made of, for example, polypropylene sheet material.

The present invention will be explained with reference to the appended drawings, in which:
Figure 1 shows a flower truck with guard means according to a first embodiment placed therein.
Figure 2 shows a flower truck with guard means in the form of a shield placed therein.
Figure 3 shows an embodiment of guard means provided with the fixing means according to the present invention.
Figure 4 shows the positioning of fixing means according to the present invention in the openings of an upright.
Figure 5 shows the fixing means according to the present invention fixed in the upright of a flower truck, the fixing means being provided with securing means for the band or the sheet.

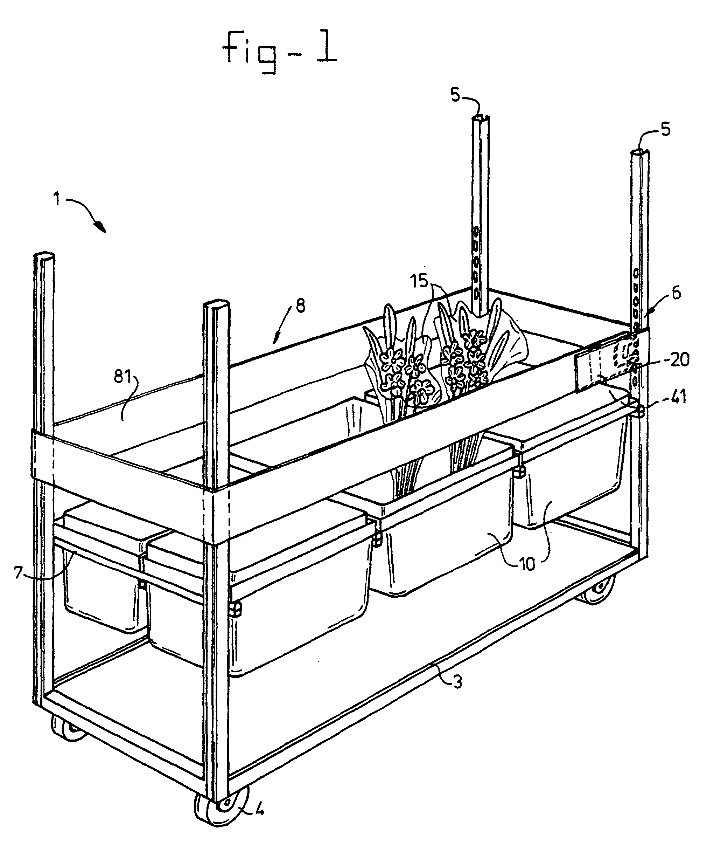

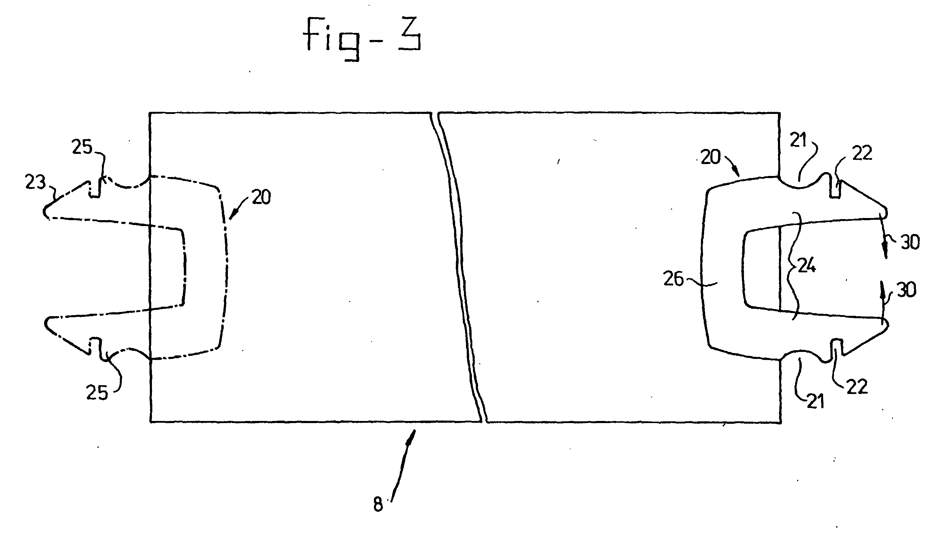

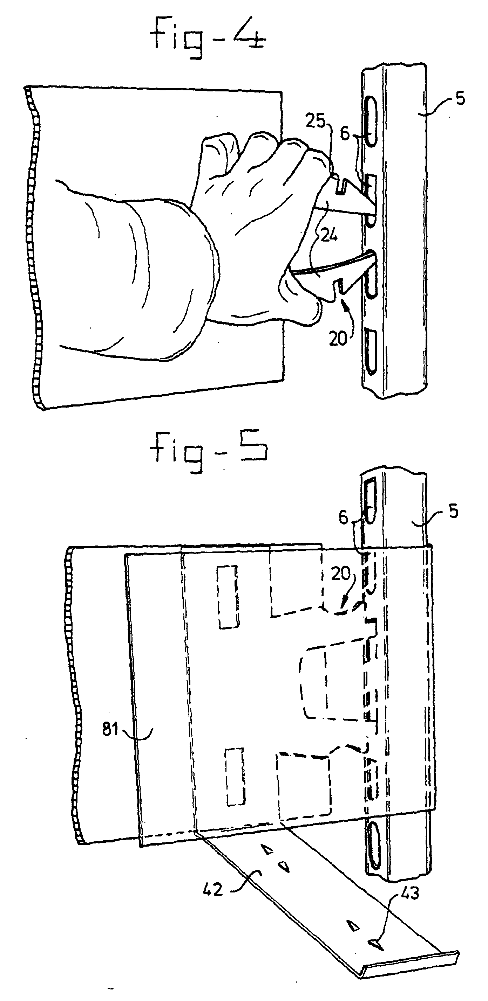

Figure 1 shows a flower truck 1 with guard means 8 fitted between the uprights 5. The flower truck 1 consists of a base section 3, which is provided with wheels 4. Vertically oriented uprights 5 are fixed at the corners of the base section 3. Said uprights 5 are provided with openings 6. The shape of the openings 6 is clearly shown in Figures 4 and 5. Horizontal frames 7 can be placed in the openings 6. Crates 10 for flowers or plants can be placed on or suspended from said frames. Flowers 15, for example, are placed in said crates 10.

To protect the flowers 15 during transport, or to prevent the flowers 15 protruding beyond the plane spanned by the vertical uprights 5, guard means 8 can be fixed between the uprights.

Figure 1 shows the case where the guard means 8 are formed by a band or a sheet 81. According to the present invention the band or the sheet 81 is provided at a first end with fixing means 20. Said fixing means 20 are shown in detail in Figure 3 and can be fixed in a simple manner in the openings 6 in the uprights 5 (see Figures 4 and 5). After the first end of the band or the sheet 81 has been fixed in one of the uprights 5, the band or the sheet 81 can be wound around the other uprights 5. When the band or the sheet 81 has been wound around the entire truck 1, the second end thereof is secured on the first end of the band or the sheet 81. Said securing can, for example, be effected with the aid of adhesive or clamping means. Fixing the guard means 8 in this way has the advantage that the length of, for example, the band or the sheet 81 is adjustable. If the truck 1 is completely filled and the flowers 15 protrude far beyond the truck 1 it is advantageous for the band or the sheet 81 to be kept relatively long. When the band or the sheet 81 is pulled tight, the flowers 15 will be pulled inside the truck 1. If the truck 1 is filled to a lesser extent, it will be possible for the band or the sheet 81 to be less long.

Figure 1 shows the case where the band or the sheet is provided with, for example, a double-sided adhesive tape or touch-and-close strip, indicated diagrammatically by the strip 41. The second end of the band or the sheet 81 can also be clamped firmly to the first end of the band or the sheet 81. This variant is discussed below with reference to Figure 5.

It is also possible for the band or the sheet 81 to be rolled up on a roll (not shown). A hook element can be fixed to this roll, by means of which hook element the roll, and thus the second end of the band or the sheet 81, can be detachably secured. Said hook element can be of such construction that the roll can be secured by the hook element to one of the uprights 5, to the fixing element 20 or to the first end of the band or the sheet 81.

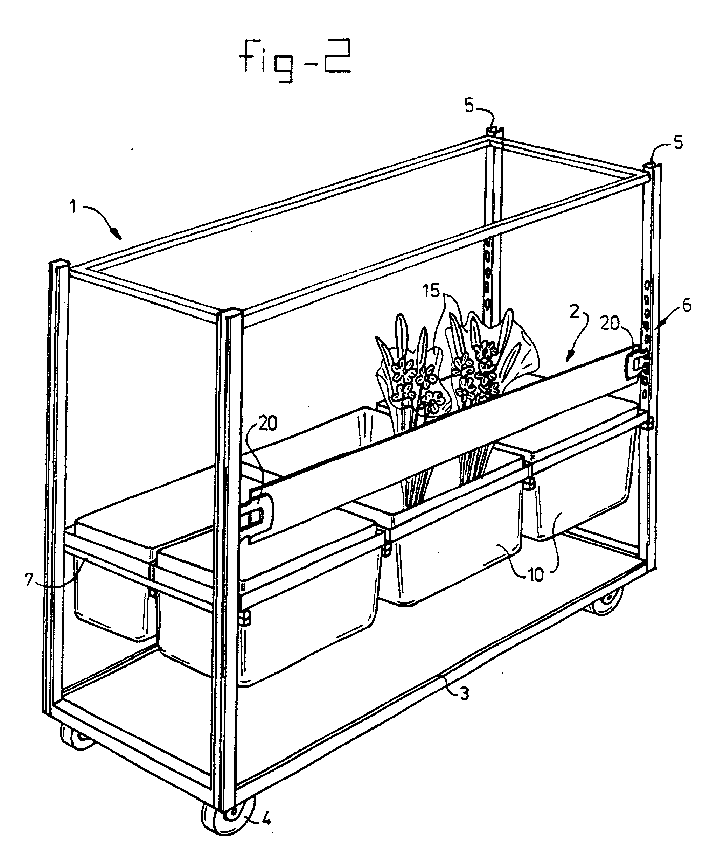

Figure 2 shows the case where the guard means 8 are formed by a relatively rigid shield 2. Said shield 2 is provided at both ends with fixing means 20 and can be clamped between two uprights 5. The shield 2 is preferably made of polypropylene. Polypropylene has the advantage that it is easy to recycle. The shield can, for example, consist of a sheet with chambers made therein in the longitudinal direction.

The fixing means 20 are also preferably made of polypropylene. The fixing means 20 can be punched from a solid sheet of said material or can be injection moulded or can be produced in another way. The fixing means 20 are preferably integral with a connecting strip such that a U-shaped element is obtained which can be fixed to the shield by ultrasonic welding. If the connecting piece, which joins the two arms of the U to one another, is joined to the shield, the arms themselves have a relatively great freedom of movement with respect to the guard. This facilitates moving the arms of the U towards one another and consequently improves the use of the fixing means 20. The advantage of the use of a shield 2 is that the shield 2 provides relatively good protection for the flowers or plants in the truck 1.

Figure 3 shows the guard means 8 according to the present invention. The guard means 8 are provided at least at the first end (on the right in the drawing) with fixing means 20. If the guard means are formed by a shield, the second end (on the left in the drawing) is also provided with fixing means 20 (shown as dotted lines). The fixing means 20 themselves comprise two strips 24 which extend, a certain distance apart, in the longitudinal direction from the band, the sheet 81 or the shield 2. The strips 24 are joined to one another with the aid of a connecting piece 26. The drawing shows fixing means 20 which are in one piece and are in the shape of a U. It is also possible to provide the shield 2 at the ends with two separate strips 24. The strips 24 are provided with essentially rounded depressions 21 which are made such that it is easy to exert force on the strips 24 using the fingers in order to move the strips 24 towards one another. The elements move towards one another in accordance with the arrows 30 shown in Figure 3. In addition to the depressions 21 intended for the fingers, the strips 24 also have notches 22 which are matched to the thickness of the material of the upright 5. Those ends 2 of the strips 24 which face away from one another are provided with chamfers or roundings 23 to facilitate fixing the strips 24 in the openings 6 of the uprights 5. It can be seen from Figure 3 that the distance between the two protrusions 25 is greater than the distance between the two ends of the gradients at the location of the transitions from the chamfers 23 to the notches 22. The protrusions 25 can consequently be used as a stop when placing the fixing means 20 in the uprights 5. The fixing means 20 are joined to the guard means over a relatively small surface of the fixing means 20. This increases the flexibility of the fixing means 20 and this facilitates moving the strips 24 towards one another. Fixing of fixing means 20 in an upright 5 is shown in Figures 4 and 5. It can be seen from Figure 4 that a user moves the strips 24 of the fixing means 20 towards one another by hand. This causes the distance spanned by the strips 24 with respect to one another to decrease and the fixing means 20 can be inserted in the openings 6. During this operation the fixing means 20 are inserted into the openings 6 up to the point where the protrusions 25 come into contact with the material of the upright 5. The protrusions 25 are thus used as a stop. The user then releases the flexible fixing means 20 and the latter will assume their original shape as a result of the elastic energy stored therein. This causes the notches 22 to close around the material of the upright 5 and the fixing means 20 engage firmly in the upright 5, as can be seen in Figure 4.

The construction of fixing means 20 is such that when the strips 24 are moved towards one another by hand the strips make a composite movement. During this movement the outsides of the strips 24 which are held clamped by the fingers move further away from the band, the sheet 81 or the shield 2 than do the insides of the strips 24 facing one another.

Figure 4 shows the case where the fixing means 20 according to the present invention are inserted in an upright 5 of a so-called Danish truck. In the uprights 5 there are alternating oval-shaped openings 6 and oval-shaped openings 6 with flattened tops. Because the openings 6 in the uprights 5 alternate in shape, it is virtually impossible for a user to fit a horizontal bearer (or a shield) skew between the uprights 5. The dimensions of the fixing means 20 shown in the figures are preferably matched to the standard dimensions of the openings 6 in said Danish trucks or other types of trucks.

Figure 5 shows the case where the guard means 8 comprise a band or a sheet 81, the second end being fixed to the first end with the aid of a clamp. The clamping means are formed by a hinged strip 42 which is fixed to the body of the fixing means 20. Sharp points 43 are provided in the hinged strip 42. The strip 42 can be folded tightly around the band or the sheet 81, as a result of which the points 43 engage in the band or the sheet 81. The strip 42 can be fixed in the closed position, for example with the aid of snap-fit fasteners.

It is clear that in the figures discussed above there is only one possible application for the use of the fixing means 20 according to the present invention. The fixing means 20 can also be used for fixing numerous other articles to another article which has at least one opening.

## Claims

1. Article transporter (1) in which crates (10) intended to hold flowers (15) or plants can be placed, comprising a base section or base frame (3), provided with wheels (4) on the underside, and vertically positioned uprights (5), fitted at the corners of the base section or base frame (3), which uprights (5) are provided with openings (6), and guard means (8) which extend essentially horizontally between the uprights (5), the guard means (8) being provided at least at a first end with fixing means (20) which can be detachably fixed in the openings (6), **characterised in that** the fixing means (20) consist of two essentially parallel strips (24) positioned some distance apart, at least one of which strips (24) is elastically bendable, whilst a notch (22) or hook has been made in at least one strip (24).

2. Article transporter according to Claim 1, **characterised in that** a depression (21) in which a thumb or finger can be placed is made in those edges of the two strips (24) which face away from one another.

3. Article transporter according to one of the preceding claims, **characterised in that** the dimensions of the fixing means (20) are matched to the size and mutual spacing of the openings (6) in the uprights (5) of a truck of standard dimensions, such as a Danish truck.

4. Article transporter according to one of the preceding claims, **characterised in that** the guard means (8) are provided with a band or a sheet (81) of such a length that the band or the sheet (81) can be wrapped around the uprights (5) and with securing means for detachably securing the other end of the part wrapped around the uprights (5) to the uprights (5) or to the guard means (8).

5. Article transporter according to Claim 4, **characterised in that** the securing means are formed by adhesive means or touch-and-close strip (41).

6. Article transporter according to Claim 4, **characterised in that** the securing means are formed by a hinged strip (42) with lock points (43) therein, it being possible for the hinged strip (42) to be folded around the band or the sheet (81), as a result of which the lock points (43) grip forcefully in the band or the sheet (81).

7. Article transporter according to Claim 4, **characterised in that** the band or the sheet (81) is at least partially rolled up, a hook element being fixed to the roll for fixing the part wound around the uprights (5) to the truck (1) or to the guard means (8).

8. Article transporter according to one of Claims 1, 2 or 3, **characterised in that** the guard means (8) are formed by a shield (2), which is provided with fixing means (20) at the second end.

## Patentansprüche

1. Transporter (1) für Gegenstände, in welchen Kästen (10) zum Haltern von Blumen (15) oder Pflanzen eingesetzt werden können, mit einem Basisabschnitt oder Basisrahmen (3), der an seiner Unterseite mit Rädern (4) versehen ist, und mit an seinen Ecken angebrachten vertikal gerichteten Stützen (5), welche mit Öffnungen (6) versehen sind, und mit einer Schutzeinrichtung (8), welche sich horizontal zwischen den Stützen (5) erstreckt und an mindestens einem Ende mit Fixiermitteln (20) versehen ist, die entfernbar in den Öffnungen (6) fixiert werden können, **dadurch gekennzeichnet, dass** die Fixiermittel (20) aus zwei im wesentlichen parallelen Streifen (24) bestehen, die im gegenseitigen Abstand angeordnet sind und von denen mindestens einer elastisch biegbar ist, während mindestens einer der Streifen (24) eine Nut (22) oder einen Haken aufweist.

2. Transporter für Gegenstände nach Anspruch 1, **dadurch gekennzeichnet, dass** in den voneinander weg weisenden Kanten der beiden Streifen (24) eine Vertiefung (21) vorgesehen ist, in welche ein Daumen oder Finger platziert werden kann.

3. Transporter für Gegenstände nach einem der vorstehenden Ansprüche, **dadurch gekennzeichnet, dass** die Abmessungen der Fixiermittel (20) an die Größe und den gegenseitigen Abstand der Öffnungen (6) in den Stützen (5) eines Wagens mit Standardabmessungen, wie z.B. ein sogenannter dänischer Wagen, angepasst sind.

4. Transporter für Gegenstände nach einem der vorstehenden Ansprüche, **dadurch gekennzeichnet, dass** die Schutzvorrichtungen (8) mit einem Band oder Blatt (81) solcher Länge, dass das Band oder Blatt (81) um die Stützen (5) herumgelegt werden kann, und mit Befestigungsmitteln zur lösbaren Befestigung des anderen Endes des um die Stützen (5) herumgelegten Teils an den Stützen (5) oder an der Sicherheitseinrichtung (8) versehen sind.

5. Transporter für Gegenstände nach Anspruch 4, **dadurch gekennzeichnet, dass** die Sicherungsmittel durch Klebmittel oder Kontaktklebstreifen (41) gebildet sind.

6. Transporter für Gegenstände nach Anspruch 4, **dadurch gekennzeichnet, dass** die Sicherungseinrichtungen durch einen Knickstreifen (42) mit Verriegelungspunkten (43) gebildet werden, welcher um das Band oder Blatt (41) herumgefaltet werden kann, so dass die Befestigungspunkte (43) kraftschlüssig in das Band oder Blatt (41) eingreifen.

7. Transporter für Gegenstände nach Anspruch 4, **dadurch gekennzeichnet, dass** das Band oder Blatt (81) mindestens teilweise aufgerollt ist, dass an der Rolle ein Hakenelement befestigt ist zum Festlegen des um die Stützen (5) herumgelegten Teils an dem Wagen (1) oder der Sicherheitseinrichtung (8).

8. Transporter für Gegenstände nach einem der Ansprüche 1, 2 oder 3, **dadurch gekennzeichnet, dass** die Sicherheitseinrichtung (8) durch eine Platte (2) gebildet wird, die am zweiten Ende mit Befestigungsmitteln (20) versehen ist.

## Revendications

1. Transporteur d'article (1), dans lequel des caisses (10), prévues pour contenir des fleurs (15) ou des plantes peuvent être placées, comprenant une section de base ou cadre de base (3) munie de roues (4) sur la face inférieure, et des montants (5) positionnés verticalement, ajustés sur les coins de la section de base ou du cadre de base (3), ces montants (5) étant munis d'ouvertures (6) et de moyens de protection (8) s'étendant sensiblement horizontalement entre les montants (5), les moyens de protection (8) étant pourvus au moins sur une première extrémité de moyens de fixation (20) qui peuvent être fixés de façon démontable dans les ouvertures (6), **caractérisé en ce que** les moyens de fixation (20) sont formés de deux bandes (24) sensiblement parallèles, placées à une certaine distance l'une de l'autre, au moins l'une de ces bandes (24) étant déformable élastiquement, tandis qu'une encoche (22) ou un crochet a été réalisé dans au moins une bande (24).

2. Transporteur d'article selon la revendication 1, **caractérisé en ce qu'**une cavité (21), dans laquelle un pouce ou un doigt peut être placé, est réalisée dans les bords des deux bandes (24) opposés l'un à l'autre.

3. Transporteur d'article selon l'une des revendications précédentes, **caractérisé en ce que** les dimensions des moyens de fixation (20) sont adaptées à la taille et à l'espacement mutuel des ouvertures (6) ménagées dans les montants (5) d'un chariot de dimension standard, tel qu'un chariot Danois.

4. Transporteur d'article selon l'une des revendications précédentes, **caractérisé en ce que** les moyens de protection (8) sont pourvus d'une bande ou d'une feuille (81) d'une longueur faisant que la bande ou la feuille (81) peut être enveloppée autour des montants (5) et avec des moyens de fixation pour fixer de façon démontable l'autre extrémité de la partie enveloppée autour des montants (5), sur les montants (5) ou sur les moyens de protection (8).

5. Transporteur d'article selon la revendication 4, **caractérisé en ce que** les moyens de fixation sont formés par des moyens adhésifs ou bien une bande de type toucher-fermer (41).

6. Transporteur d'article selon la revendication 4, **caractérisé en ce que** les moyens de fixation sont formés par une bande articulée (42) comportant en son sein des points formant verrou (43), la bande articulée (42) pouvant être pliée autour de la bande ou de la feuille (81), suite à quoi les points formant verrou (43) s'engagent de façon forcée dans la bande ou la feuille (81).

7. Transporteur d'article selon la revendication 4, **caractérisé en ce que** la bande ou la feuille (81) est au moins partiellement enroulée, un élément de crochet étant fixé sur le rouleau pour fixation de la partie enroulée autour des montants (5) sur le chariot (1) ou sur les moyens de protection (8).

8. Transporteur d'article selon l'une des revendications 1, 2 ou 3, **caractérisé en ce que** les moyens de protection (8) sont formés par un écran (2) muni de moyens de fixation (20) à la deuxième extrémité.
